# EUROPEAN PATENT APPLICATION

(11) **EP 4 746 560 A1**
(43) Date of publication of application: **20.05.2026**
(21) Application number: 24853546.0
(22) Date of filing: 29.07.2024
(51) Int. Cl.: H04W 72/23

(54) **COMMUNICATION METHOD, APPARATUS AND SYSTEM**

(30) Priority: 11.08.2023 CN 202311019187
(71) Applicant: Huawei Technologies Co., Ltd., Shenzhen, Guangdong 518129 (CN)
(72) Inventor: DAI, Zhenhua, Shenzhen, Guangdong 518129 (CN); SHA, Tong, Shenzhen, Guangdong 518129 (CN); LI, Bingzhao, Shenzhen, Guangdong 518129 (CN); SHANG, Ke, Shenzhen, Guangdong 518129 (CN)
(74) Representative: MERH-IP Matias Erny Reichl Hoffmann Patentanwälte PartG mbB
(86) International application number: PCT/CN2024/108166
(87) International publication number: WO 2025/036134

(57) **Abstract**

This application provides a communication method, apparatus, and system. The method includes: A terminal apparatus receives configuration information, where the configuration information is used to configure the terminal apparatus to perform communication in K cells, and K is a positive integer. The terminal apparatus receives first indication information, where the first indication information indicates a first capability, the first capability is related to the configuration information, and the first capability is at least one of a first band combination, a first feature set, or a first carrier feature set. The terminal apparatus can obtain an accurate communication configuration in time, avoiding exceptions such as impaired uplink and downlink reception or bit errors that are caused because the information cannot be accurately aligned between a network apparatus and the terminal apparatus. In this way, communication quality can be improved.

## Description

This application claims priority to Chinese Patent Application No. 202311019187.5, filed with the China National Intellectual Property Administration on August 11, 2023 and entitled "COMMUNICATION METHOD, APPARATUS, AND SYSTEM", which is incorporated herein by reference in its entirety.

### TECHNICAL FIELD

This application relates to the communication field, and in particular, to a communication method, apparatus, and system.

### BACKGROUND

In a wireless communication system, generally, a terminal first reports a terminal capability, and a base station delivers, to the terminal based on the terminal capability, a radio configuration for carrying a service. In 5G, the terminal capability is extremely complex, including capabilities of a user equipment (user equipment, UE) level, a band (BAND) level, a feature set (Feature Set, FS) level, a feature set per component carrier (Feature Set Per Component carrier, FSPC) level, and a band combination (Band Combination, BC) level. The capability reported by the terminal is extremely complex. However, in a conventional technology, the terminal cannot accurately learn of, through a downlink signaling configuration, a specific capability that is reported by the terminal and based on which a configuration delivered by the base station is determined. When a terminal capability based on which the terminal expects a network to deliver a configuration is inconsistent with a terminal capability based on which the network actually delivers a configuration, exceptions such as impaired uplink and downlink reception and bit errors occur, which affect communication.

### SUMMARY

This application provides a communication method, apparatus, and system, to improve communication quality.

According to a first aspect, a communication method is provided. The method may be performed by a terminal apparatus, or may be performed by a chip or a circuit used in the terminal apparatus. This is not limited in this application. For ease of description, the following uses an example in which the terminal apparatus performs the method for description.

The method includes: The terminal apparatus receives configuration information, where the configuration information is used to configure the terminal apparatus to perform communication in K cells, and K is a positive integer. The terminal apparatus receives first indication information, where the first indication information indicates a first capability, the first capability is related to the configuration information, and the first capability is at least one of a first band combination, a first feature set, or a first carrier feature set.

In some implementations, the K cells may be replaced with K bands, and the configuration information is used to configure the terminal apparatus to perform dynamic uplink transmit channel switching in the K bands.

In the method, the terminal apparatus can obtain an accurate communication configuration in time, avoiding exceptions such as impaired uplink and downlink reception or bit errors that are caused because the information cannot be accurately aligned between a network apparatus and the terminal apparatus. In this way, communication quality can be improved.

In some implementations, before receiving the configuration information, the method further includes: The terminal apparatus sends capability information, where the capability information includes at least one of the following: at least one band combination supported by the terminal apparatus; at least one feature set supported by the terminal apparatus, where the feature set includes a downlink feature set and/or an uplink feature set, and each feature set in the feature set corresponds to one band entity in one band combination; and at least one carrier feature set supported by the terminal apparatus, where the carrier feature set includes a downlink carrier feature set and/or an uplink carrier feature set, and each carrier feature set in the carrier feature set corresponds to one carrier on one band in one band combination.

In some implementations, the first capability is the first band combination, the first indication information indicates an identifier of the first band combination, and the first band combination belongs to the at least one band combination supported by the terminal apparatus.

In some implementations, the first capability is the first feature set, the first indication information indicates an index of the first feature set, the index of the first feature set indicates a location of the first feature set in a first feature set combination, the first feature set combination is a feature set combination corresponding to the first band combination, and the first feature set is a subset of the at least one feature set supported by the terminal apparatus.

In some implementations, the first capability is the first carrier feature set, the first indication information indicates an identifier of the first carrier feature set, the first carrier feature set is a first downlink carrier feature set and/or a first uplink carrier feature set, and the first carrier feature set is a subset of the at least one carrier feature set supported by the terminal apparatus.

In some implementations, the first carrier feature set belongs to a first carrier feature set combination, the first carrier feature set combination includes L carrier feature sets, L is a positive integer, the first carrier feature set combination corresponds to a first cell, and the first cell belongs to the K cells.

In some implementations, the K cells are in one-to-one correspondence with K carrier feature set combinations, and each carrier feature set combination in the K carrier feature set combinations includes one or more carrier feature sets.

In some implementations, the L carrier feature sets are in one-to-one correspondence with L carriers, the L carriers are candidate carriers used for communication in the first cell, the L carrier feature sets belong to the first carrier feature set combination, and the first carrier feature set combination corresponds to the first cell.

In some implementations, L uplink carrier feature sets are arranged based on a first sequence, and the first sequence is an arrangement sequence of the L carriers in the first cell; and/or the L carrier feature sets are L downlink carrier feature sets, the L downlink carrier feature sets are arranged based on a second sequence, and the second sequence is an arrangement sequence of L downlink carriers in the first cell.

In this implementation, the carrier feature sets are arranged based on a sequence of the carriers, and a carrier feature set corresponding to a specific carrier may be determined based on the sequence without the need of another indication. This reduces indication overheads.

In some implementations, the first indication information further indicates a first carrier corresponding to the first carrier feature set.

In some implementations, the capability information is first capability information, the capability information includes a first identifier, and the first identifier indicates that the capability information is the first capability information.

In this manner, the first identifier carried in the capability information can enable the network apparatus and the terminal apparatus to determine the same capability information, to avoid a failure for the terminal apparatus to determine corresponding capability information in a plurality of pieces of capability information. In this way, accuracy of determining the first capability by the terminal is improved.

According to a second aspect, a communication method is provided. The method may be performed by a network apparatus, or may be performed by a chip or a circuit used in the network apparatus. This is not limited in this application. For ease of description, the following uses an example in which the network apparatus performs the method for description.

The method includes: The network apparatus determines configuration information based on a first capability, where the first capability is at least one of a first band combination, a first feature set, or a first carrier feature set, the configuration information is used to configure a terminal apparatus to perform communication in K cells, and K is a positive integer. The network apparatus sends the configuration information. The network apparatus sends first indication information, where the first indication information indicates the first capability.

In some implementations, before sending the configuration information, the method further includes: The network apparatus receives capability information, where the capability information includes at least one of the following: at least one band combination supported by the terminal apparatus; at least one feature set supported by the terminal apparatus, where the feature set includes a downlink feature set and/or an uplink feature set, and each feature set in the feature set corresponds to one band entity in one band combination; and at least one carrier feature set supported by the terminal apparatus, where the carrier feature set includes a downlink carrier feature set and/or an uplink carrier feature set, and each carrier feature set in the carrier feature set corresponds to one carrier on one band in one band combination.

In some implementations, the first capability is the first band combination, the first indication information indicates an identifier of the first band combination, and the first band combination belongs to the at least one band combination supported by the terminal apparatus.

The identifier of the first band combination may indicate a location of the first band combination in the at least one band combination. The at least one band combination may be presented in a form of a list, a set, or the like. For example, the identifier of the first band combination may be an index in a band combination list. Each band combination in the band combination list may correspond to one identifier (or referred to as one index). Identifiers may be in an ascending order based on an arrangement sequence of all band combination entries. For example, an identifier of a 1^{st} band combination is 1, an identifier of a 2^{nd} band combination is 2, and the rest can be deduced by analogy.

Optionally, the band combination list is a band combination list supporting uplink transmit channel switching, and the identifier of the first band combination indicates a location of the first band combination in the band combination list supporting the uplink transmit channel switching.

Optionally, in a dual connectivity (Dual Connection, DC) scenario, the band combination list is a band combination list reported by the terminal apparatus in UE-MRDC-Capability. In an NR scenario, the band combination list is a band combination list reported by the terminal apparatus in UE-NR-Capability.

In some implementations, the first capability is the first feature set, the first indication information indicates an index of the first feature set, the index of the first feature set indicates a location of the first feature set in a first feature set combination, the first feature set combination is a feature set combination corresponding to the first band combination, and the first feature set is a subset of the at least one feature set supported by the terminal apparatus.

In some implementations, the first capability is the first carrier feature set, the first indication information indicates an identifier of the first carrier feature set, the first carrier feature set is a first downlink carrier feature set and/or a first uplink carrier feature set, and the first carrier feature set is a subset of the at least one carrier feature set supported by the terminal apparatus.

In some implementations, the first carrier feature set belongs to a first carrier feature set combination, the first carrier feature set combination includes L carrier feature sets, L is a positive integer, the first carrier feature set combination corresponds to a first cell, and the first cell belongs to the K cells.

In some implementations, the K cells are in one-to-one correspondence with K carrier feature set combinations, and each carrier feature set combination in the K carrier feature set combinations includes one or more carrier feature sets.

In some implementations, the L carrier feature sets are in one-to-one correspondence with L carriers, the L carriers are candidate carriers used for communication in the first cell, the L carrier feature sets belong to the first carrier feature set combination, and the first carrier feature set combination corresponds to the first cell.

In some implementations, L uplink carrier feature sets are arranged based on a first sequence, and the first sequence is an arrangement sequence of the L carriers in the first cell; and/or the L carrier feature sets are L downlink carrier feature sets, the L downlink carrier feature sets are arranged based on a second sequence, and the second sequence is an arrangement sequence of L downlink carriers in the first cell.

In some implementations, the first indication information further indicates a first carrier corresponding to the first carrier feature set.

In some implementations, the method further includes: the capability information is first capability information, the capability information includes a first identifier, and the first identifier indicates that the capability information is the first capability information.

It should be understood that the second aspect is network apparatus-side implementation corresponding to the first aspect. Descriptions of explanations, supplements, possible implementations, and beneficial effects related to the first aspect are also applicable to the second aspect. Details are not described herein again.

According to a third aspect, a communication method is provided. The method may be performed by a terminal apparatus, or may be performed by a chip or a circuit used in the terminal apparatus. This is not limited in this application. For ease of description, the following uses an example in which the terminal apparatus performs the method for description.

The method includes: The terminal apparatus receives configuration information, where the configuration information is used to configure the terminal apparatus to perform uplink transmit channel switching or downlink receive channel switching between bands in a first band pair, the first band pair includes at least two bands, and the configuration information includes at least one of the following:
identifiers of the bands included in the first band pair;
a switching option for transmission channel switching between the bands in the first band pair;
switching time for the transmission channel switching between the bands in the first band pair;
a quantity of transmission channels for the transmission channel switching between the bands in the first band pair; and
an identifier of a second band affected by the transmission channel switching between the bands in the first band pair.

In the method, a network indicates, in the configuration information, information such as the switching time for the transmission channel switching in the first band pair, to avoid inconsistent understanding between the terminal and the network on the transmission channel switching, and avoid a case in which the terminal cannot correctly decode a data block delivered by the network when switching time expected by the terminal in the first band pair is less than switching time for the network to dynamically schedule the transmission channel switching, and therefore a bit error that occurs during the transmission channel switching. In this way, communication reliability is improved.

The identifiers of the bands included in the first band pair indicates locations that are of bands supporting dynamic switching and that are in at least one band pair. The at least one band pair may be in a form of a list or a set. For example, the identifiers of the bands included in the first band pair may be identifiers (or referred to as indexes) of the bands included in the first band pair in the band pair list, to indicate locations of the bands included in the first band pair in the band pair list. The identifiers may be in an ascending order based on an arrangement sequence of all band combination entries. For example, an identifier of a 1^{st} band combination is 1, an identifier of a 2^{nd} band combination is 2, and the rest can be deduced by analogy.

Optionally, the band combination list is a band combination list supporting the uplink transmit channel switching, and an identifier of a first band combination indicates a location of the first band combination in the band combination list supporting the uplink transmit channel switching.

Optionally, in a dual connectivity (Dual Connection, DC) scenario, the band combination list is a band combination list reported by the terminal apparatus in UE-MRDC-Capability. In an NR scenario, the band combination list is a band combination list reported by the terminal apparatus in UE-NR-Capability.

In some implementations, when the transmission channel switching is the uplink transmit channel switching, the second band is a band on which downlink receiving is affected by the uplink transmit channel switching between the bands in the first band pair.

In some implementations, when the transmission channel switching is the uplink transmit channel switching, the switching option for the transmission channel switching between the bands in the first band pair is switched uplink transmission switchedUL or dual uplink transmission dualUL; or
when the transmission channel switching is the downlink receive channel switching, the switching option for the transmission channel switching between the bands in the first band pair is switched downlink transmission switchedDL or dual downlink transmission dualDL.

In some implementations, before receiving the configuration information, the method further includes: The terminal apparatus sends capability information, where the capability information includes a transmission channel switching capability supported by the terminal apparatus.

According to a fourth aspect, a communication method is provided. The method may be performed by a network apparatus, or may be performed by a chip or a circuit used in the network apparatus. This is not limited in this application. For ease of description, the following uses an example in which the network apparatus performs the method for description.

The network apparatus sends configuration information, where the configuration information is used to configure a terminal apparatus to perform uplink transmit channel switching or downlink receive channel switching between bands in a first band pair, the first band pair includes at least two bands, and the configuration information includes at least one of the following:
identifiers of the bands included in the first band pair;
a switching option for transmission channel switching between the bands in the first band pair;
switching time for the transmission channel switching between the bands in the first band pair;
a quantity of transmission channels for the transmission channel switching between the bands in the first band pair; and
an identifier of a second band affected by the transmission channel switching between the bands in the first band pair.

In some implementations, when the transmission channel switching is the uplink transmit channel switching, the second band is a band on which downlink receiving is affected by the uplink transmit channel switching between the bands in the first band pair.

In some implementations, when the transmission channel switching is the uplink transmit channel switching, the switching option for the transmission channel switching between the bands in the first band pair is switched uplink transmission switchedUL or dual uplink transmission dualUL; or
when the transmission channel switching is the downlink receive channel switching, the switching option for the transmission channel switching between the bands in the first band pair is switched downlink transmission switchedDL or dual downlink transmission dualDL.

In some implementations, before sending the configuration information, the method further includes:

The network apparatus receives capability information, where the capability information includes a transmission channel switching capability supported by the terminal apparatus. The network apparatus determines the configuration information based on the capability information.

It should be understood that the fourth aspect is network apparatus-side implementation corresponding to the third aspect. Descriptions of explanations, supplements, possible implementations, and beneficial effects related to the third aspect are also applicable to the fourth aspect. Details are not described herein again.

According to a fifth aspect, an embodiment of this application provides a communication apparatus, including a transceiver unit and a processing unit. The communication apparatus is configured to perform the method in the first aspect, the third aspect, any possible manner of the first aspect, any possible manner of the third aspect, all possible manners of the first aspect, or all possible manners of the third aspect.

According to a sixth aspect, an embodiment of this application provides a communication apparatus, including a transceiver unit and a processing unit. The communication apparatus is configured to perform the method in the second aspect, the fourth aspect, any possible manner of the second aspect, any possible manner of the fourth aspect, all possible manners of the second aspect, or all possible manners of the fourth aspect.

According to a seventh aspect, an embodiment of this application provides a communication apparatus, including an interface circuit and a processor. The interface circuit is configured to implement a function of the transceiver module in the fifth aspect, and the processor is configured to implement a function of the processing module in the fifth aspect.

According to an eighth aspect, an embodiment of this application provides a communication apparatus, including an interface circuit and a processor. The interface circuit is configured to implement a function of the transceiver module in the sixth aspect, and the processor is configured to implement a function of the processing module in the sixth aspect.

According to a ninth aspect, an embodiment of this application provides a computer-readable medium. The computer-readable medium stores program code executed by a terminal device, and the program code includes instructions used to perform the method in the first aspect, the third aspect, any possible manner of the first aspect, any possible manner of the third aspect, all possible manners of the first aspect, or all possible manners of the third aspect.

According to a tenth aspect, an embodiment of this application provides a computer-readable medium. The computer-readable medium stores program code executed by a network device, and the program code includes instructions used to perform the method in the second aspect, the fourth aspect, any possible manner of the second aspect, any possible manner of the fourth aspect, all possible manners of the second aspect, or all possible manners of the fourth aspect.

According to an eleventh aspect, a computer program product storing computer-readable instructions is provided. When the computer-readable instructions are run on a computer, the computer is enabled to perform the method in the first aspect, the third aspect, any possible manner of the first aspect, any possible manner of the third aspect, all possible manners of the first aspect, or all possible manners of the third aspect.

According to a twelfth aspect, a computer program product storing computer-readable instructions is provided. When the computer-readable instructions are run on a computer, the computer is enabled to perform the method in the second aspect, the fourth aspect, any possible manner of the second aspect, any possible manner of the fourth aspect, all possible manners of the second aspect, or all possible manners of the fourth aspect.

According to a thirteenth aspect, a communication system is provided. The communication system includes: an apparatus that has a function of implementing the method in the first aspect, the third aspect, any possible manner of the first aspect, any possible manner of the third aspect, all possible manners of the first aspect, or all possible manners of the third aspect, and various possible designs; and an apparatus that has a function of implementing the method in the second aspect, the fourth aspect, any possible manner of the second aspect, any possible manner of the fourth aspect, all possible manners of the second aspect, or all possible manners of the fourth aspect, and various possible designs.

According to a fourteenth aspect, a processor is provided, and is configured to: be coupled to a memory, and perform the method in the first aspect, the third aspect, any possible manner of the first aspect, any possible manner of the third aspect, all possible manners of the first aspect, or all possible manners of the third aspect.

According to a fifteenth aspect, a processor is provided, and is configured to: be coupled to a memory, and perform the method in the second aspect, the fourth aspect, any possible manner of the second aspect, any possible manner of the fourth aspect, all possible manners of the second aspect, or all possible manners of the fourth aspect.

According to a sixteenth aspect, a chip system is provided. The chip system includes a processor, and may further include a memory. The processor is configured to execute a computer program or instructions stored in the memory, to enable the chip system to implement the method in any one of the first aspect, the second aspect, the third aspect, or the fourth aspect and the possible implementations of the first aspect, the second aspect, the third aspect, or the fourth aspect. The chip system may include a chip, or may include a chip and another discrete device.

According to a seventeenth aspect, a communication method is provided. The method includes: A network apparatus determines configuration information based on a first capability, where the first capability is at least one of a first band combination, a first feature set, or a first carrier feature set, the configuration information is used to configure a terminal apparatus to perform communication in K cells, and K is a positive integer. The network apparatus sends the configuration information to the terminal apparatus. The network apparatus sends first indication information to the terminal apparatus, where the first indication information indicates the first capability.

According to an eighteenth aspect, a communication method is provided. The method includes: A network apparatus sends configuration information to a terminal apparatus, where the configuration information is used to configure the terminal apparatus to perform uplink transmit channel switching or downlink receive channel switching between bands in a first band pair, the first band pair includes at least two bands, and the configuration information includes at least one of the following:
identifiers of the bands included in the first band pair;
a transmission type of transmission channel switching between the bands in the first band pair;
switching time for the transmission channel switching between the bands in the first band pair; and
an identifier of a second band affected by the transmission channel switching between the bands in the first band pair.

### BRIEF DESCRIPTION OF DRAWINGS

FIG. 1 shows a system architecture to which an embodiment of this application is applicable;
FIG. 2 is a diagram of a communication method;
FIG. 3 is a diagram of a correspondence between a feature set and a band combination;
FIG. 4 is a diagram of a communication method;
FIG. 5 is a schematic flowchart of several communication methods;
FIG. 6 is a schematic flowchart of two communication methods;
FIG. 7 is a schematic flowchart of another communication method;
FIG. 8 is a block diagram of a communication apparatus; and
FIG. 9 is a block diagram of another communication apparatus.

### DESCRIPTION OF EMBODIMENTS

The following describes technical solutions of this application with reference to accompanying drawings.

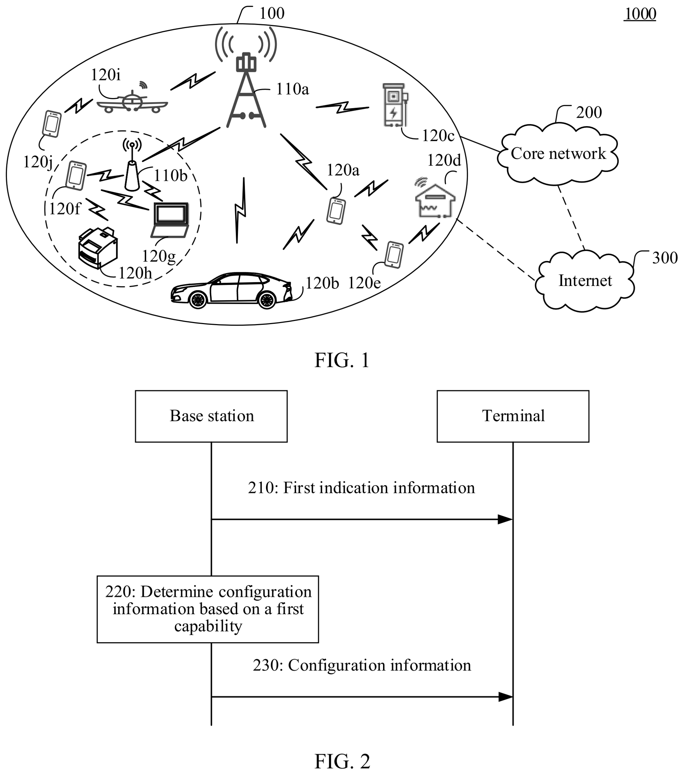

FIG. 1 is a diagram of an architecture of a communication system 1000 to which an embodiment of this application is applicable. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, functions of the core network device and logical functions of the radio access network device are integrated into a same physical device, or some functions of the core network device and some functions of the radio access network device are integrated into one physical device. A wired or wireless manner may be used for connection between terminals and between radio access network devices. FIG. 1 is merely a diagram. The communication system may further include other network devices, for example, may further include a wireless relay device and a wireless backhaul device, which are not shown in FIG. 1.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or unit that completes some functions of the base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete functions of a part or all of a physical layer. For specific descriptions of the foregoing protocol layers, refer to technical specifications related to the 3rd generation partnership project (3rd generation partnership project, 3GPP). The radio access network device may be a macro base station (for example, 110a in FIG. 1), may be a micro base station or an indoor base station (for example, 110b in FIG. 1), or may be a relay node or a donor node. A specific technology and a specific device form that are used by the radio access network device are not limited in embodiments of this application. For ease of description, the following provides descriptions by using an example in which the radio access network device is the base station.

The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), an internet of things (internet of things, IoT), virtual reality, augmented reality, industrial control, self-driving, telemedicine, a smart grid, smart furniture, smart office, a smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in embodiments of this application. The following provides descriptions by using an example in which a radio terminal device is the terminal.

The base station and the terminal may be at fixed locations, or may be mobile. The base station and the terminal may be deployed on land, including an indoor device, an outdoor device, a handheld device, or a vehicle-mounted device; may be deployed on water; or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 via 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b in FIG. 1 each may be referred to as a communication apparatus having a function of the base station, and 120a to 120j in FIG. 1 each may be referred to as a communication apparatus having a function of the terminal.

Communication between the base station and the terminal, between base stations, or between terminals may be performed by using a licensed spectrum, may be performed by using an unlicensed spectrum, or may be performed by using both the licensed spectrum and the unlicensed spectrum. Communication may be performed by using a spectrum below 6 gigahertz (gigahertz, GHz), may be performed by using a spectrum above 6 GHz, or may be performed by using both the spectrum below 6 GHz and the spectrum above 6 GHz. A spectrum resource used for wireless communication is not limited in embodiments of this application.

In embodiments of this application, a function of the base station may alternatively be performed by a module (for example, a chip) in the base station, or may be performed by a control subsystem including the function of the base station. The control subsystem including the function of the base station herein may be a control center in the foregoing application scenarios, such as the smart grid, the industrial control, the smart transportation, and the smart city. A function of the terminal may alternatively be performed by a module (for example, a chip or a modem) in the terminal, or may be performed by an apparatus including the function of the terminal.

The technical solutions provided in embodiments of this application may be applied to wireless communication between communication devices. The wireless communication between the communication devices may include wireless communication between the base station and the terminal, wireless communication between base stations, and wireless communication between terminal devices. In embodiments of this application, the term "wireless communication" may also be referred to as "communication" for short, and the term "communication" may also be described as "data transmission", "information transmission", or "transmission".

It may be understood that, in embodiments of this application, a physical uplink shared channel (physical downlink shared channel, PDSCH), a physical downlink control channel (physical downlink control channel, PDCCH), and a physical uplink shared channel (physical uplink shared channel, PUSCH) are merely respectively used as examples of a downlink data channel, a downlink control channel, and an uplink data channel. In different systems and different scenarios, a data channel and a control channel may have different names. This is not limited in embodiments of this application.

In a wireless communication system, generally, a terminal first reports a terminal capability, and a base station delivers, to the terminal based on the terminal capability, a radio configuration for carrying a service. In 5G, the terminal capability is extremely complex, including capabilities of a UE level, a BAND level, a feature set (Feature Set, FS) level, a feature set per component carrier (Feature Set Per Component carrier, FSPC) level, and a band combination (Band Combination, BC) level. One BC includes a plurality of bands, each band may have a plurality of types of FS level capabilities, and each FS may include a plurality of FSPC level capabilities. There are various types of BCs. Each type supports a maximum of 65536 BCs. The type of the BC may be a BC used for NR standalone (StandAlone, SA) (for example, reported in a supportedBandCombinationList information element in UE-NR-Capability), a BC used for MR-DC (for example, reported in a supportedBandCombinationList information element in UE-MRDC-Capability), and a BC used for uplink antenna selection (for example, reported in a supportedBandCombinationList-UplinkTxSwitch information element).

When configuring carrier aggregation or dual connectivity, the base station delivers a configuration to the terminal based on the BC level capability reported by the terminal, as well as considering the terminal level capability and BAND level capability. For example, for dynamic uplink transmit switching Uplink Tx switching, the terminal reports a BC that supports uplink transmit switching. Each BC for the uplink transmit switching includes at least two bands. The terminal further reports switching time for dynamic uplink switching in a band pair before and after the switching, and the terminal does not perform uplink transmission within the switching time. The terminal further reports a switching option (switched uplink switch UL or dual uplink dual UL) and other capabilities. When configuring dynamic uplink antenna switching, the base station indicates, in a radio resource control (Radio Resource Control, RRC) configuration, a band for the uplink transmit switching, and dynamically schedules the uplink transmit switching via lower layer signaling (for example, downlink control information (downlink control information, DCI)). The terminal determines, based on information about the RRC configuration, how to perform the uplink antenna switching. However, the terminal may report a plurality of BCs, and the plurality of BCs may include same band pairs that support the uplink transmit switching, but these band pairs have different switching time in different BCs. Therefore, the terminal needs to align with the base station about a specific BC level capability based on which the uplink transmit switching configured by the base station is determined, to avoid the following case: in a case of inconsistency between a BC level capability applied when the terminal expects the base station to deliver a configuration and a BC level capability actually applied when the base station configures the configuration, switching time expected by the terminal for scheduling by the base station is less than switching time actually used by the base station for the scheduling, and therefore the terminal cannot correctly decode data during the dynamic switching.

For another example, in consideration of protection of underlying hardware, the terminal needs to perform a specific capability check on a configuration of the base station, in other words, ensure that the configuration of the base station meets a capability reported by the terminal. Therefore, the terminal also needs to learn of a specific BC, a specific FS, or a specific FSPC based on which the base station delivers the configuration.

The BC level capability reported by the terminal is extremely complex, and a unique BC cannot be accurately matched by using a downlink signaling configuration. The following is used as an example for brief description.

The terminal reports the following capability:

| Band combination Band combination (BC) | Band pair (band pair) for uplink transmit switching | Switching time for uplink transmit switching |
|---|---|---|
| BC #1: band A+band B+band C+band D | band A-band B | 140 µs |
| | band A-band C | 35 µs |
| | band B-band C | 35 µs |
| BC #2: band A+band B+band C+band E | band A-band B | 35 µs |
| | band A-band C | 140 µs |
| | band B-band C | 35 µs |

A carrier aggregation (Carrier Aggregation, CA) combination configured by the base station is PCell (band A)+SCell #1 (band B)+SCell #2 (band C).

Because the CA combination {band A+band B+band C} configured by the base station may be obtained from the foregoing BC 1 and BC 2, the base station may configure the CA combination {band A+band B+band C} based on a capability of the BC #1, or may configure the CA combination {band A+band B+band C} based on a capability of the BC #2. The terminal cannot uniquely determine a specific BC level capability based on which the base station delivers a configuration. Consequently, switching time for uplink transmit switching cannot be aligned between the terminal and the base station, causing exceptions such as impaired uplink and downlink reception and bit errors.

In view of this, this application provides a communication method. According to the method, a terminal can accurately obtain a configuration of a base station, avoiding impact on communication.

It should be understood that a transmit channel (transmitter, TX): a radio frequency (radio frequency, RF) transmit channel in this application is referred to as a transmit channel for short, which is a physical concept. The transmit channel may receive a baseband signal from a baseband chip, perform radio frequency processing (such as up-conversion, amplification, and filtering) on the baseband signal to obtain a radio frequency signal, and finally radiate the radio frequency signal into space through an antenna. Specifically, the transmit channel may include one or more of electronic devices such as an antenna switch, an antenna tuner, a low noise amplifier (low noise amplifier, LNA), a power amplifier (power amplifier, PA), a mixer (mixer), a local oscillator (local oscillator, LO), and a filter (filter). These electronic devices may be integrated into one or more chips based on a requirement. The antenna may also be considered as a part of the transmit channel sometimes.

In embodiments of this application, the transmit channel may alternatively be replaced with Tx, an antenna, radio frequency, a radio frequency chain, a transmit port, a quantity of radio frequency chains, a quantity of transmission layers, a maximum quantity of transmission layers, a maximum quantity of layers supported for transmission, a receive channel, or any combination thereof.

As shown in FIG. 2, the method includes the following steps.

210: A base station sends first indication information to a terminal, and correspondingly, the terminal receives the first indication information.

The first indication information indicates a first capability. The first capability is at least one of a first band combination (BC), a first feature set (FS), or a first carrier feature set.

The first capability may be the first band combination. The first band combination belongs to at least one band combination supported by the terminal.

For example, the at least one band combination may be the foregoing BC 1, BC 2, and BC 3, and the first capability is the BC 1.

In a possible implementation, the first indication information indicates an identifier of the first band combination. In one band combination set, a band combination identifier can be used to uniquely determine a band combination. For example, the band combination set includes a band combination A, a band combination B, and a band combination C. An identifier of the band combination A is 1, an identifier of the band combination B is 2, and an identifier of the band combination C is 3. When the first indication information indicates an identifier of a band combination in a specific band combination set, the first indication information can uniquely indicate the specific band combination in the band combination set. For example, the first indication information indicates the identifier 2, to be specific, indicates the band combination B.

The band combination set may alternatively be a band combination list (BC List), and one band combination list includes a plurality of band combinations. The at least one band combination supported by the terminal may be a band combination list. The band combination list supported by the terminal may be determined from a plurality of band combination lists. For example, the terminal determines, from a band combination list A, a band combination list B, or a band combination list C, a band combination list of the first band combination, for example, the band combination list A. In a possible manner, the terminal selects a corresponding band combination list from the plurality of band combination lists based on a current communication requirement. For example, if a current wireless communication access technology is NR, the terminal determines the first band combination based on a band combination list applicable to NR; if a current wireless communication access technology is MRDC, the terminal determines the first band combination based on a band combination list applicable to MRDC; or if uplink transmit switching is currently configured in a network, the terminal determines the first band combination based on a band combination list applicable to the uplink transmit switching.

Alternatively, the identifier of the first band combination may indicate a location of the first band combination in the at least one band combination. The at least one band combination may be presented in a form of a list, a set, or the like. For example, the identifier of the first band combination may be an index in the band combination list. Each band combination in the band combination list may correspond to one identifier (or referred to as one index), to indicate a location of the corresponding band combination in the band combination list. Identifiers may be in an ascending order based on an arrangement sequence of all band combination entries. For example, an identifier of a 1^{st} band combination is 1, an identifier of a 2^{nd} band combination is 2, and the rest can be deduced by analogy. Different band combination lists respectively correspond to different identifiers. In other words, band combination lists may be distinguished from each other by using identifiers.

Optionally, the first indication information further indicates an identifier of a band combination list. An identifier of a band combination list and a band combination identifier can be used to uniquely determine a band combination. For example, an identifier of a band combination list A is A, including 10 band combinations whose identifiers are 1 to 10; and an identifier of a band combination list B is B, including 12 band combinations whose identifiers are 1 to 12. If the first indication information indicates only the identifier of the band combination, for example, 8, there is a band combination whose identifier is 8 in both the two band combination lists. When the first indication information indicates the identifier A and the identifier 8, a band combination whose identifier is 8 in the band combination list A may be uniquely indicated.

It should be understood that the identifier and the index (index) may be replaced with each other. For example, the identifier of the first band combination may be replaced with an index of the first band combination. This application is not limited thereto. For example, any manner having a distinguishing function is applicable to an identifier of the foregoing band combination and/or the band combination list.

Optionally, before the base station sends the first indication information, the base station may obtain capability information of the terminal. The capability information may be from the terminal, or may be from another access network device or a core network device, in other words, is capability information forwarded by the another access network device or the core network device from the terminal. The capability information includes the at least one band combination supported by the terminal, in other words, the supported band combination list reported by the terminal to the base station.

It should be understood that the base station that sends the first indication information and the base station that obtains the capability information of the terminal may be the same base station, or may be different base stations.

Optionally, in a dual connectivity (EUTRA-NR Dual Connection, EN-DC) scenario, the band combination list is a band combination list reported by the terminal apparatus in UE-MRDC-Capability. In an NR scenario, the band combination list is a band combination list reported by the terminal apparatus in UE-NR-Capability.

Optionally, the band combination list is a band combination list supporting uplink transmit channel switching, and the identifier of the first band combination indicates a location of the first band combination in the band combination list supporting the uplink transmit channel switching.

The following provides an example of the first indication information when the first capability is the first band combination.

An example of the first indication information is as follows:

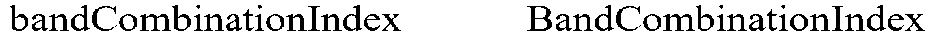

This field indicates an index of a band combination, in other words, an index of a band combination that is in the band combination list (BCList) reported by the terminal in the capability information and to which a BC configured by the base station refers.

The band combination list has the following versions:
When uplinkTxSwitching is not configured for SA, BCList corresponds to supportedBandCombinationList in UE-NR-Capability.

When uplinkTxSwitching is configured for SA, BCList corresponds to supportedBandCombinationList-UplinkTxSwitch-r16 in UE-NR-Capability.

When uplinkTxSwitching is not configured for MRDC, BCList corresponds to supportedBandCombinationList in UE-MRDC-Capability.

When uplinkTxSwitching is configured for MRDC, BCList corresponds to supportedBandCombinationList-UplinkTxSwitch-r16 in UE-MRDC-Capability.

That is, BCList is related to NR, MRDC, and whether uplinkTxSwitching is configured.

The capability information is first capability information, the capability information includes a first identifier, and the first identifier indicates that the capability information is the first capability information. In a possible scenario, when a terminal capability is updated, the base station is triggered to re-query, and the terminal reports a terminal capability. However, the capability reported by the terminal may not be sent to another network device in time. When the terminal moves between base stations, for example, moves from a first access network device to a second access network device, if the second access network device fails to obtain latest terminal capability information in time, and uses capability information before the capability update, a band combination determined by the second access network device is different from a band combination determined by the terminal based on a band combination identifier indicated in configuration information. For example, because a quantity, an arrangement sequence, and the like of band combinations in a band combination list change, a band combination corresponding to a same identifier in the band combination list before and after the capability update changes. For example, the capability information includes a total of 32 identifiers, an identifier of initial terminal capability information is 0, and the identifier is increased by 1 when a terminal capability changes. Capability containers (containers) of different access technologies may respectively correspond to different identifiers.

A possible implementation of the capability information reported by the terminal to the base station is as follows:

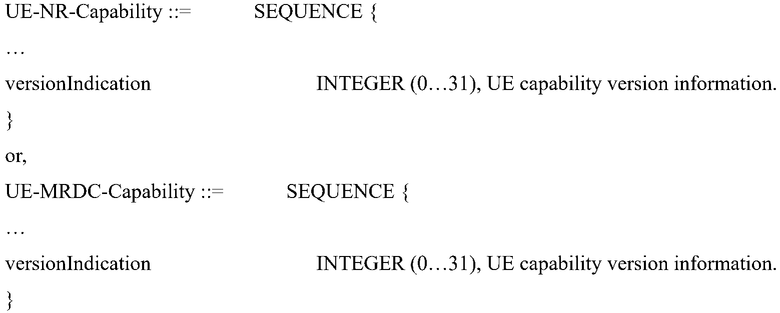

versionIndication is an example of the first identifier.

The first capability may alternatively be the first feature set.

A feature (feature) is a function and a feature of a communication resource used for data transmission in a wireless communication system, to meet a specific communication requirement.

For example, the feature set (feature set) may cover a plurality of aspects, for example, a modulation scheme, a coding method, a modulation rate, spectral efficiency, and a multiple access technology. These functions and features are critical to aspects like ensuring communication quality, maximizing bandwidth utilization, and providing different quality of service.

Optionally, the feature may be a carrier feature, or may be a feature of a band in a band combination. In other words, the feature set may be a feature set of a carrier, or may include a feature set of a band in a band combination. In this specification, for differentiation, a feature set (Feature Set) corresponds to a set of capability parameters of one band entity (band entry) in one band combination, and a carrier feature set (Feature Set Per CC) corresponds to a set of capability parameters of one carrier on one band entity in one band combination.

The first feature set belongs to at least one feature set supported by the terminal. In other words, the first feature set is a subset of the at least one feature set supported by the terminal. Each feature set in the at least one feature set corresponds to one band entity (band entry) in one band combination (BC).

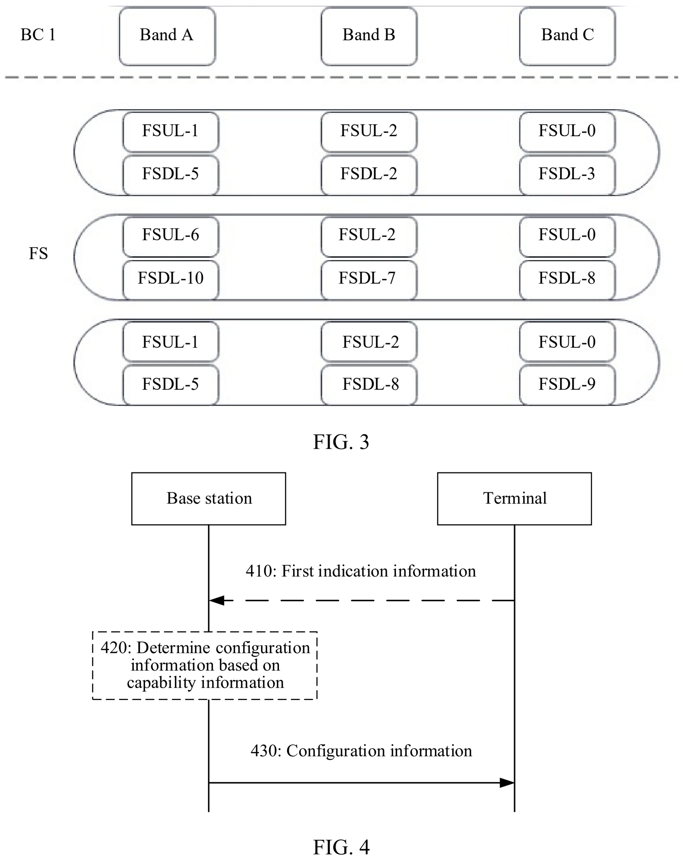

FIG. 3 is a diagram of a correspondence between a feature set and a band combination.

As shown in the figure, a band combination BC 1 includes three band entities: a band A, a band B, and a band C. Each band entity corresponds to at least one feature set. For example, the band A corresponds to FSUL-1 (feature set uplink, FSUL) and FSDL-5 (feature set downlink, FSDL), or FSUL-6 and FSDL-10; the band B corresponds to FSUL-2 and FSDL-2, FSUL-2 and FSDL-7, or FSUL-2 and FSDL-8; and the band B corresponds to FSUL-0 and FSDL-3, FSUL-0 and FSDL-8, or FSUL-0 and FSDL-0.

FSDL is a downlink feature set feature set downlink, and may be used for downlink transmission. FSUL is an uplink feature set feature set uplink, and may be used for uplink transmission. An uplink feature set and a downlink feature set corresponding to each band entity are collectively referred to as a feature set. In other words, the first feature set includes an uplink feature set and a downlink feature set. FSUL-1 and FSDL-5 mean: In a first row of FSs, identifiers of an uplink FS and a downlink FS of the band A in an FSUL set and an FSDL set are respectively 1 and 5.

A feature set combination corresponding to the BC 1 includes three rows of FSs, each row of FSs includes at least one pair of downlink/uplink feature sets, and each pair of downlink/uplink feature sets corresponds to one band entity in the BC #1. For example, the first row includes feature sets FSUL-1 and FSDL-5, FSUL-2 and FSDL-2, and FSUL-0 and FSDL-3, which respectively correspond to the band A, the band B, and the band C. One BC may have a plurality of rows of FSs, which respectively correspond to capabilities of different feature sets of each band entity. For example, in a second row, feature sets are FSUL-6/FSDL-10, FSUL-2/FSDL-7, and FSUL-0/FSDL-8, which respectively correspond to another set of capabilities of the band A, the band B, and the band C.

In a possible implementation, the first indication information indicates an index (or referred to as an identifier) of the first feature set, and the index of the first feature set indicates a location of the first feature set in a first feature set combination. The first feature set combination is a feature set combination corresponding to the first band combination. In other words, the first feature set is used to determine a pair of downlink/uplink feature sets corresponding to each band in the band combination. For example, when the index of the first feature set is 1, it indicates that in the BC #1, feature sets corresponding to the band A are FSUL-1 and FSDL-5, feature sets corresponding to the band B are FSUL-2 and FSDL-2, and feature sets corresponding to the band C are FSUL-0 and FSDL-3. In other words, when the first indication information indicates the index 1, FSs in the first row are indicated.

It should be understood that the feature set in the foregoing example includes a downlink feature set and an uplink feature set. However, this is not limited thereto. For example, the feature set includes a downlink feature set, or the feature set includes an uplink feature set. In other words, the feature set in this application includes an uplink feature set and/or a downlink feature set.

Specifically, an example of the first indication information is as follows:
featureSetEntryIndex

This field indicates a specific row of FSs in an FSC corresponding to the BC to which the FS of the base station refers. In other words, the first indication information indicates the location of the first feature set in the first feature set combination. Further, the first capability may be the first carrier feature set (Feature set per CC). The first carrier feature set is a subset of at least one carrier feature set supported by the terminal. The first carrier feature set is a first downlink carrier feature set and/or a first uplink carrier feature set.

The first carrier feature set belongs to a first carrier feature set combination. The first carrier feature set combination includes L carrier feature sets, L is a positive integer, and the first carrier feature set combination corresponds to a first cell. The first cell is a cell in which the terminal is configured to perform communication. In other words, the first cell is a serving cell of the terminal. There may be a plurality of cells in which the terminal is configured to perform communication, for example, K cells, where K is a positive integer. The first cell belongs to the K cells.

The K cells are in one-to-one correspondence with K carrier feature set combinations. Each carrier feature set combination includes one or more carrier feature sets.

In a possible manner, the K carrier feature set combinations are arranged based on a preset sequence, and the preset sequence is an arrangement sequence of the K cells. For example, a value of K is 3, the three cells are arranged in a sequence of a cell A, a cell B, and a cell C, and the three carrier feature set combinations are respectively a carrier feature set combination A, a carrier feature set combination B, and a carrier feature set combination C, where the carrier feature set combination A corresponds to the cell A, the carrier feature set combination B corresponds to the cell B, and the carrier feature set combination C corresponds to the cell C. Alternatively, the three cells are arranged in a sequence of a PCell, a SCell #1, and a SCell #2, and the three carrier feature set combinations are respectively a carrier feature set combination A, a carrier feature set combination B, and a carrier feature set combination C, which respectively correspond to the PCell, the SCell #1, and the SCell #2.

An arrangement sequence of the cells may be first the primary cell and then the secondary cells, and an arrangement sequence of the secondary cells may be an ascending order (in other words, arranged in an ascending order of cell indexes) or a descending order (in other words, arranged in a descending order of cell indexes) of secondary cell indexes configured by the network.

In another possible manner, the L carrier feature sets are in one-to-one correspondence with L carriers, and the L carriers are candidate carriers used for communication in the first cell. In other words, the L carriers are configured for the terminal to perform communication in the first cell. The terminal may perform communication in the first cell by using a part of the carriers, or by using all the L carriers. For example, when one cell corresponds to two uplink carriers: a supplementary uplink (supplementary UL) and a normal uplink (normal UL, NUL), a carrier feature set combination corresponding to the cell includes two carriers, which are in one-to-one correspondence with the NUL and the SUL.

The foregoing L carrier feature sets belong to the first carrier feature set combination, and the first carrier feature set combination corresponds to the first cell. In other words, the first cell corresponds to a carrier feature set combination, the carrier feature set combination includes a plurality of carrier feature sets, and the plurality of carrier feature sets are in one-to-one correspondence with a plurality of carriers. In other words, the carrier feature set is of a per CC level.

For example, a value of L is 3, the three carriers are a CC 1, a CC 2, and a CC 3, and the first carrier feature set combination includes three carrier feature sets: a carrier feature set 1, a carrier feature set 2, and a carrier feature set 3. The carrier feature set 1 corresponds to the CC 1, the carrier feature set 2 corresponds to the CC 2, and the carrier feature set 3 corresponds to the CC 3. The correspondence may also be understood as that the carrier feature set is a feature set of a carrier. For example, the carrier feature set 1 is a feature set of the CC 1, and indicates a function or a feature of the CC 1.

In a possible implementation, the carrier feature set may be an uplink carrier feature set or a downlink carrier feature set. L uplink carrier feature sets are arranged based on a first sequence, and the first sequence is an arrangement sequence of the L carriers in the first cell. L downlink carrier feature sets are arranged based on a second sequence, and the second sequence is an arrangement sequence of L downlink carriers in the first cell. That is, the carrier feature sets are arranged based on a sequence of the carriers.

For example, the value of L is 4, the four carriers are a carrier B, a carrier A, a carrier C, and a carrier D, and the four carrier feature sets are a carrier feature set 1, a carrier feature set 2, a carrier feature set 3, and a carrier feature set 4. The carrier feature set 1 corresponds to the carrier B, the carrier feature set 2 corresponds to the carrier A, the carrier feature set 3 corresponds to the carrier C, and the carrier feature set 4 corresponds to the carrier D.

For another example, when one cell corresponds to two uplink carriers: an NUL and an SUL, and the first sequence is first the NUL and then the SUL, a carrier feature set 1 corresponds to the NUL, and a carrier feature set 2 corresponds to the SUL.

Optionally, the first indication information further indicates a carrier corresponding to the first carrier feature set, to be specific, a first carrier. For example, the first indication information may indicate an index of the first carrier.

The feature set may alternatively be a cell feature set. For example, the first capability is a first cell feature set. The first cell feature set corresponds to the first cell. The feature set is in one-to-one correspondence with the cell. That is, the feature set is of a cell level.

Optionally, in a set of cell feature sets, a plurality of cell feature sets are arranged in sequence, for example, arranged based on a sequence of cells. For example, a quantity of cells is 4, the four cells are a cell B, a cell A, a cell C, and a cell D, and the four cell feature sets are a cell feature set 1, a cell feature set 2, a cell feature set 3, and a cell feature set 4. The cell feature set 1 corresponds to the cell B, the cell feature set 2 corresponds to the cell A, the cell feature set 3 corresponds to the cell C, and the cell feature set 4 corresponds to the cell D.

The plurality of cells may be serving cells.

An example of the first indication information is as follows:

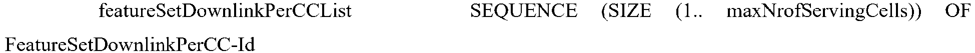

FeatureSetDownlinkPerCC-Id is an identifier (or referred to as an index) of a downlink carrier feature set corresponding to each cell.

In a possible implementation, the plurality of cells are arranged in an ascending order of cellIndex, and a smallest cellIndex corresponds to a 1^{st} feature set in featureSetDownlinkPerCCList.

In a DAPS handover scenario, a source cell may be ranked before a target cell. The source cell is a serving cell before the handover, and the target cell is a destination cell of the handover.

Another example of the first indication information is as follows:

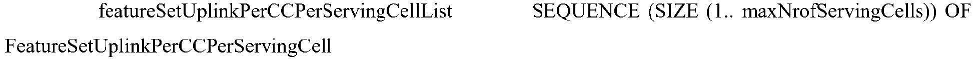

FeatureSetUplinkPerCCPerServingCell is an uplink carrier feature set corresponding to each cell.

In a possible implementation, the cells are arranged in an ascending order of cellIndex, and a smallest cellIndex corresponds to a 1^{st} feature set in featureSetUplinkPerCCPerServingCellList.

In a DAPS handover scenario, a source cell is ranked before a target cell.

Another example of the first indication information is as follows:

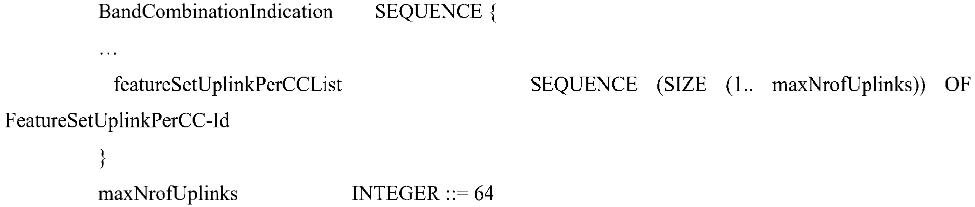

FeatureSetUplinkPerCC-Id is an identifier (or referred to as an index) of an uplink carrier feature set corresponding to an uplink (Uplink).

In a possible implementation, a value 0 of the identifier indicates an invalid value, which is used in a carrierSwitching or SDL scenario.

Cells are arranged in ascending order of cellIndex. All NULs are arranged first and then all SULs are arranged. A smallest cellIndex corresponds to a 1^{st} uplink carrier feature set in featureSetUplinkPerCCList.

In a DAPS handover scenario, a source cell is ranked before a target cell.

In another example of the first indication information, FeatureSetDownlinkPerCC is placed in a configuration of each CC.

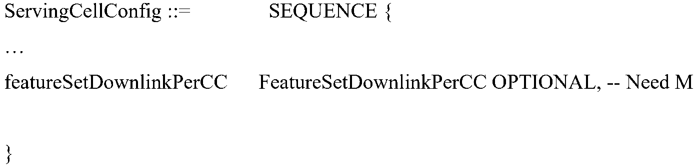

This field indicates FeatureSetDownlinkPerCC-Id corresponding to a cell.

In another example of the first indication information, FeatureuplinkPerCC is placed in each uplink configuration.

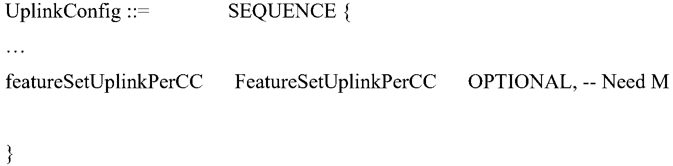

A value 0 of FeatureSetDownlinkPerCC-Id corresponding to a cell indicates an invalid value, which is used in a carrierSwitching scenario.

Optionally, the first indication information may be carried in RRC signaling, for example, an RRC reconfiguration message (RRCReconfiguration) or an RRC resume (RRC Resume) message.

Optionally, the first indication information may be of a Need M (maintained) type, in other words, the terminal needs to store the first indication information. When the first indication information in the RRC signaling that carries the first indication information is defaulted, the terminal uses first indication information that is stored or received last time.

220: The base station determines configuration information based on the first capability.

In other words, the configuration information is related to the first capability. For example, the first capability is the first band combination, and the configuration information may be configuration information related to the first band combination, for example, a carrier configuration that is used for CA or DC and that is determined based on the first band combination. For example, the base station may determine, based on a capability of the first band combination, a quantity of MIMO layers configured for a carrier. For another example, the base station determines, based on the first band combination, information such as a band pair (band pair) for switching and a corresponding switching period (period) in an uplink transmit switching scenario. Different band combinations may correspond to different configuration information.

It should be understood that the switching period (Switching period), switching time, and switching interruption duration in this application may be interchanged.

For example, the first capability is the BC 1, and the BC 1 includes three bands: the band A, the band B, and the band C. The base station delivers CA configurations of a CC 1 on the band A, a CC 2 on the band B, and a CC 3 on the band C based on a capability of the BC 1. The terminal determines, based on the first capability, that a switching period for uplink transmit switching between the carriers on the band A and the band C is 35 µs, and a switching period for uplink transmit switching between the carriers on the band A and the band B is 140 µs.

Optionally, the configuration information does not include a switching period in a band pair, but the terminal may determine, based on the first indication information, a specific BC level capability based on which the base station delivers a configuration, to determine uplink switching time used for uplink transmit switching.

For another example, a carrier feature set 1 corresponds to a CC 1, a carrier feature set 2 corresponds to a CC 2, and a carrier feature set 3 corresponds to a CC 3. The first capability delivered by the base station to the terminal is the carrier feature set 1. The terminal determines, based on the carrier feature set 1, that a switching period of transmit switching on the CC 1 is 35 µs.

For still another example, a cell feature set 1 corresponds to a cell 1, a cell feature set 2 corresponds to a cell 2, and a cell feature set 3 corresponds to a cell 3. The first capability delivered by the base station to the terminal is the cell feature set 2. The terminal determines, based on the cell feature set 2, that a switching period of transmit switching in the cell 2 is 140 µs. For example, the terminal determines that a switching period of transmit switching on a carrier in the cell 2 is 140 µs.

In other words, the base station determines the first capability, and then determines a related configuration for the terminal based on the first capability, that is, the configuration information is associated with a terminal capability.

It should be understood that the first indication information and the configuration information may be carried in a same message. For example, the message may be an RRC reconfiguration message (RRCReconfiguration) or an RRC resume (RRC Resume) message. The first indication information and the configuration information may alternatively be carried in different messages.

230: The base station sends the configuration information to the terminal, and correspondingly, the terminal receives the configuration information.

The configuration information indicates the configuration determined by the base station for the terminal based on the first capability in step 220. For the configuration information, refer to the descriptions in step 220.

The terminal may communicate with the base station in a serving cell based on the configuration information.

For example, the message may be an RRC reconfiguration message (RRCReconfiguration), an RRC resume (RRC Resume) message, or an RRC connection reconfiguration message (RRCConnectionReconfiguration).

For example, the configuration information may be carried in RRCmobilityFromEUTRACommand, for example, carried in an NR target access technology capability container message NR targetRAT-MessageContainer.

In the method, the terminal can obtain an accurate communication configuration in time, avoiding exceptions such as impaired uplink and downlink reception or bit errors caused because the information cannot be accurately aligned between the base station and the terminal. In this way, communication quality can be improved.

An embodiment of this application further provides a communication method. As shown in FIG. 4, the method includes the following steps.

410: A terminal sends capability information to a base station, and correspondingly, the base station receives the capability information.

The capability information includes a transmission channel switching capability supported by the terminal.

For example, the terminal reports two band combinations: a BC #1 and a BC #2. The BC #1 includes bands {band A+band B+band C+band D}, and the BC #2 includes bands {band A+band B+band C+band D}. A band pair for uplink transmit switching and switching time in the band pair that are reported in the BC #1 and the BC #2 may be shown in the following table.

| Band combination Band combination (BC) | Band pair (band pair) for uplink transmit switching | Switching time for uplink transmit switching |
|---|---|---|
| BC #1: band A+band B+band C+band D | band A-band B | 140 µs |
| | band A-band C | 35 µs |
| | band B-band C | 35 µs |
| BC #2: band A+band B+band C+band E | band A-band B | 35 µs |
| | band A-band C | 140 µs |
| | band B-band C | 35 µs |

It should be understood that the table is merely used as an example. For example, a correspondence between the switching time, the band pair, and the band combination in the table is merely used as an example.

420: The base station determines configuration information based on the capability information.

The configuration information is used to configure the terminal to perform uplink transmit channel switching or downlink receive channel switching between bands in a first band pair.

The uplink transmit channel (Tx chain) switching in this application may be replaced with uplink transmit (Tx) switching. The uplink transmit switching may be dynamic uplink transmit switching, in other words, uplink transmit switching integrating an RRC configuration and dynamic scheduling via lower layer signaling.

The first band pair includes at least two bands. For example, the first band pair includes a first band and a second band, the first band is a band of an uplink transmit channel before the channel switching, the second band is a band of the uplink transmit channel after the channel switching, and the first band is different from the second band. The first band pair belongs to a first band combination, and the first band combination may further include a second band pair. In other words, the first band combination includes at least one band pair.

The first band pair may alternatively include more than two bands. In an example, the first band pair includes four bands. The first band includes two bands, which are bands of uplink transmit channels before the channel switching. The second band includes two bands, which are bands of the uplink transmit channels after the channel switching. The bands included in the first band may be different from or partially the same as the bands included in the second band. For example, the terminal has two transmit channels. Before the channel switching, the transmit channels are respectively located in the band A and the band B, and after the switching, the transmit channels are respectively located in the band C and the band D. For another example, before the switching, the transmit channels are respectively located in the band A and the band B, and after the switching, the transmit channels are respectively located in the band A and the band C.

In another example, the first band pair includes three bands. The first band includes two bands, which are bands of uplink transmit channels before the channel switching. The second band includes one band, which is a band of the uplink transmit channels after the channel switching.

For example, the first band combination includes a band pair A and a band pair B, where the band pair A includes a band 1 and a band 2, and the band pair B includes a band 3 and a band 4.

Identifiers of the bands included in the first band pair indicates locations that are of bands supporting dynamic switching and that are in the at least one band pair. The at least one band pair may be in a form of a list or a set. For example, the identifiers of the bands included in the first band pair may be identifiers (or referred to as indexes) of the bands included in the first band pair in the band pair list, to indicate locations of the bands included in the first band pair in the band pair list.

The configuration information includes at least one of the following:
the identifiers of the bands included in the first band pair;
a switching option (UplinkTxSwitchingOption) for transmission channel switching between the bands in the first band pair;
switching time for the transmission channel switching between the bands in the first band pair;
a quantity of transmission channels for the transmission channel switching between the bands in the first band pair; and an identifier of the second band affected by the transmission channel switching between the bands in the first band pair.

The bands included in the first band pair each correspond to one identifier. For example, the first band pair includes a band A and a band B, the band A corresponds to an identifier 1, and the band B corresponds to an identifier 2. It should be understood that the identifier may also be referred to as an index (index) of a band.

An example of the switching option for the transmission channel switching between the bands in the first band pair is as follows:
when the transmission channel switching is the uplink transmit channel switching, the switching option for the transmission channel switching between the bands in the first band pair is switched uplink transmission switchedUL or dual uplink transmission dualUL; or
when the transmission channel switching is the downlink receive channel switching, the switching option for the transmission channel switching between the bands in the first band pair is switched downlink transmission switchedDL or dual downlink transmission dualDL.

For the second band affected by the transmission channel switching between the bands in the first band pair:

In a possible implementation, when the transmission channel switching is the uplink transmit channel switching, the second band is a band on which downlink receiving is affected by the uplink transmit channel switching between the bands in the first band pair.

In another possible implementation, when transmission channel switching is the downlink receive channel switching, the second band is a band on which uplink transmitting is affected by the downlink receive channel switching between the bands in the first band pair.

For example, the capability information reported by the terminal to the base station is shown in Table 2. Table 2 includes two types of capabilities: the BC #1 and the BC #2. The base station determines, from Table 2, that the first capability is the BC #1, and then determines the configuration information based on the BC #1. For example, the bands include the band A, the band B, the band C, and the band D. The band pair includes three types: band A-band B, band A-band C and band B-band C. Further, transmission channel switching between bands in the three types of band pairs is uplink transmit switching. In addition, the base station may determine that switching time in different band pairs for the transmission channel switching are as follows: switching time in band A-band B is 140 µs, switching time in band A-band C is 35 µs, and switching time in band B-band C is 35 µs.

Optionally, the terminal may alternatively determine, based on capability information indicated by the base station, configuration information corresponding to the capability. For example, when the base station indicates, to the terminal, that the first capability is the BC #1, and configures band pairs for the uplink transmit switching as the foregoing three types of band pairs, the terminal may further determine, based on the BC #1, information such as switching time for transmission channel switching between the foregoing band pairs. In other words, switching time in the three band pairs band A-band B, band A-band C, and band B-band C is: 140 µs, 35 µs, and 35 µs, rather than 35 µs, 140 µs, and 35 µs in the BC #2. In this way, a receiving bit error caused by inconsistency between switching time that the terminal expects the base station to use and switching time actually used by the base station can be avoided.

Optionally, when the quantity of transmission channels for the transmission channel switching in the first band pair differs, corresponding switching time may also differ. For example, for transmission channel switching between 1Tx (in other words, the quantity of transmission channels is 1) and 2Tx (in other words, the quantity of transmission channels is 2) in the first band pair, corresponding switching time is first switching time; and for transmission channel switching between 2Tx and 2Tx in the first band pair, corresponding switching time is second switching time. The first switching time may be different from the second switching time. In the foregoing configuration information, the base station may separately indicate the first switching time and the second switching time.

Optionally, in an EN-DC scenario, the terminal may report the band pair list in UE-MRDC-Capability. In an NR scenario, the terminal may report the band pair list in UE-NR-Capability.

410 and 420 are optional steps. It should be further understood that, in a possible implementation, the base station that receives the capability information in 410 and the base station that determines the configuration information based on the capability information in 420 may be different base stations.

For example, the capability information may be from the terminal, or may be from another access network device or a core network device, in other words, is capability information forwarded by the another access network device or the core network device from the terminal. A base station #A receives the capability information, and forwards the capability information to a base station #B, and then the base station #B determines the configuration information based on the capability information.

430: The base station sends the configuration information to the terminal, and correspondingly, the terminal receives the configuration information.

For the configuration information, refer to the descriptions in step 420.

In the method, the base station indicates, in the configuration information, information such as the first band pair for the transmission channel switching, the switching time for the transmission channel switching between the bands in the first band pair, and the switching option for the transmission channel switching in the first band pair, to avoid inconsistent understanding between the terminal and the base station on the transmission channel switching, and avoid a case in which the terminal cannot correctly decode a data block delivered by a network when switching time expected by the terminal in the first band pair is less than switching time for the base station to dynamically schedule the transmission channel switching, and therefore a bit error occurs during the transmission channel switching. In this way, communication reliability is improved.

To facilitate understanding of the communication method in this application, the following provides several implementation examples in different communication scenarios.

### Example 1: In an SA networking scenario:

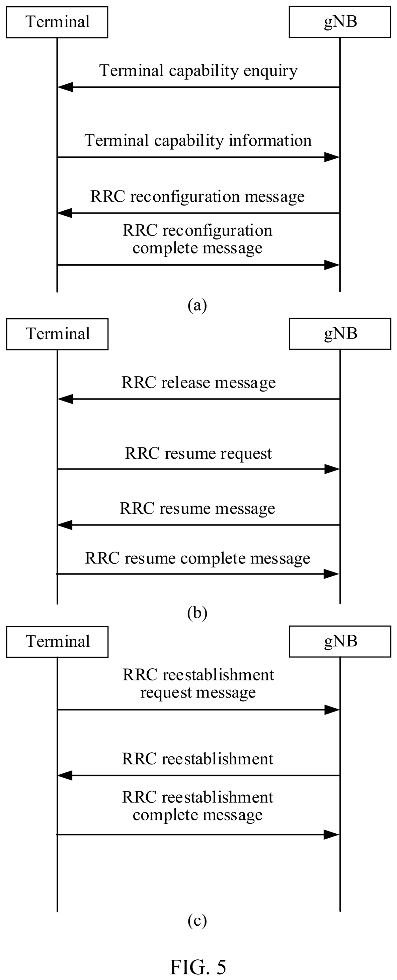

A possible implementation is shown in (a) in FIG. 5.

The terminal sends the capability information to the base station (for example, a next generation NodeB (next Generation NodeB, gNB)), and correspondingly, the base station receives the capability information.

The capability information is UECapabilityInformation. The terminal includes a capability version indication (an example of a first identifier) in UECapabilityInformation, and reports, to the base station, a capability supported by the terminal, for example, BCList.

The base station sends an RRC reconfiguration message to the terminal, and correspondingly, the terminal receives the RRC reconfiguration message.

The base station includes at least one of the following in the RRC reconfiguration message (RRCReconfiguration): capability version information, a BC indication, an indication of a specific row of FSs corresponding to a BC, featureSetDownlinkPerCC corresponding to each CC, and featureSetUplinkPerCC corresponding to each uplink.

In other words, the first indication information is carried in the RRC reconfiguration message.

The terminal completes RRC reconfiguration with the base station based on a configuration indicated by the base station.

The terminal sends an RRC reconfiguration complete message to the base station.

Another possible implementation is shown in (b) in FIG. 5.

The base station sends an RRC release message (RRCRelease) to the terminal, and correspondingly, the terminal receives the RRC release message.

The terminal enters an RRC inactive (inactive) state based on the RRC release message. In this case, the first indication information is invalid. The first indication information being invalid means that the terminal deletes first indication information that is stored or received last time, in other words, the first indication information is of a Need M type. For the following descriptions of the first indication information being invalid, refer to the descriptions herein. Details are not described again.

The terminal sends an RRC resume request to the base station, and correspondingly, the base station receives the RRC resume request.

The base station sends an RRC resume message (RRC Resume) to the terminal, and correspondingly, the terminal receives the RRC resume message.

The RRC resume message carries at least one of the following: capability version information, a BC indication, an indication of a specific row of FSs corresponding to a BC, featureSetDownlinkPerCC corresponding to each CC, and featureSetUplinkPerCC corresponding to each uplink. In other words, the first indication information is carried in the RRC resume message.

The terminal completes RRC resume with the base station based on the RRC resume message.

The terminal sends an RRC resume complete message to the base station, and correspondingly, the base station receives the RRC resume complete message.

Another possible implementation is shown in (c) in FIG. 5.

The terminal sends an RRC reestablishment request (RRCReestablishment Request) to the base station, and correspondingly, the base station receives the RRC reestablishment request.

In this case, the first indication information is invalid. For example, before the RRC reestablishment request is sent, the first indication information is invalid.

The base station sends an RRC reestablishment (RRCReestablishment) message to the terminal, and correspondingly, the terminal receives the RRC reestablishment message.

The terminal sends an RRC reestablishment complete message to the base station, and correspondingly, the base station receives the RRC reestablishment complete message.

Example 2: In an NSA networking scenario, the terminal accesses a network (for example, an evolved NodeB (Evolved NodeB, eNB)).

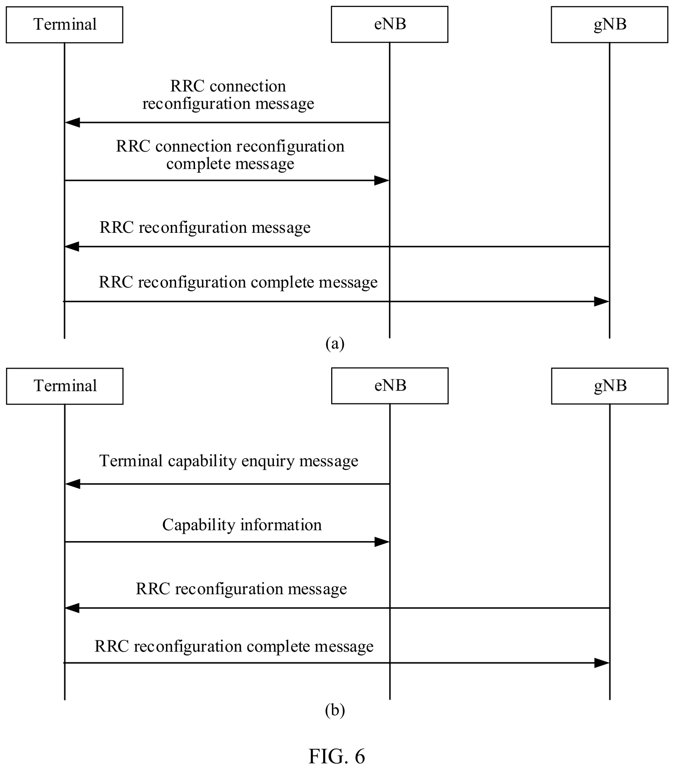

A possible implementation is shown in (a) in FIG. 6.

The eNB sends an RRC connection reconfiguration message (RRCConnectionReconfiguration) to the terminal, and correspondingly, the terminal receives the RRC connection reconfiguration message.

The RRC connection reconfiguration message carries capability version information, a BC indication, an indication of a specific row of FSs corresponding to a BC, featureSetDownlinkPerCC corresponding to each CC, and featureSetUplinkPerCC corresponding to each uplink. In other words, the first indication information is carried in the RRC connection reconfiguration message.

The terminal sends an RRC connection reconfiguration complete message to the eNB, and correspondingly, the eNB receives the connection reconfiguration complete message.

A gNB sends an RRC reconfiguration message (RRCConnectionReconfiguration) to the terminal.

The RRC connection reconfiguration message carries at least one of the following: capability version information, a BC indication, an indication of a specific row of FSs corresponding to a BC, featureSetDownlinkPerCC corresponding to each CC, and featureSetUplinkPerCC corresponding to each uplink. In other words, the first indication information is carried in the RRC connection reconfiguration message.

The terminal completes RRC connection reconfiguration with the gNB based on the RRC connection reconfiguration message.

The terminal sends an RRC connection reconfiguration complete message to the gNB, and correspondingly, the gNB receives the RRC connection reconfiguration complete message.

Another possible implementation is shown in (b) in FIG. 6.

The eNB sends capability enquiry information to the terminal, and correspondingly, the terminal receives the capability enquiry message.

The terminal sends the capability information to the eNB, and correspondingly, the eNB receives the capability information.

The capability information is UECapabilityInformation. The terminal includes a capability version indication (an example of a first identifier) in UECapabilityInformation, and reports, to the base station, a capability supported by the terminal, for example, BCList.

A gNB sends an RRC reconfiguration message to the terminal, and correspondingly, the terminal receives the RRC reconfiguration message.

The terminal sends an RRC reconfiguration complete message to the gNB, and correspondingly, the gNB receives the RRC reconfiguration message.

When the eNB sends the terminal capability enquiry message (UECapabilityEnquiry) to the terminal, the first indication information before the message is invalid. The terminal may report a supported capability to the eNB in the capability message (UECapabilityinformation). The gNB may include the first indication information in the RRC reconfiguration message again.

Example 2: In a radio access technology switching scenario:

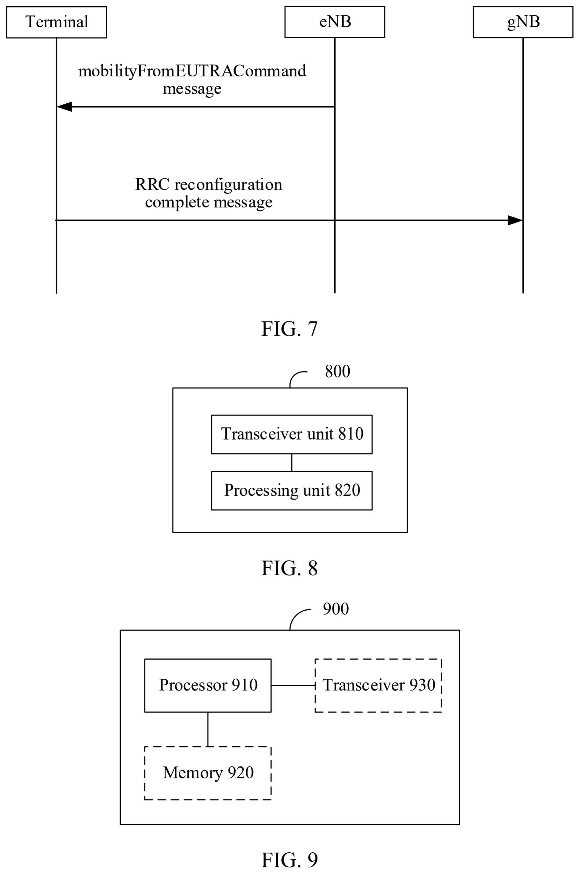

A possible implementation is shown in FIG. 7.

The terminal accesses a network and enters a connected state.

An eNB sends a mobilityFromEUTRACommand (mobilityFromEUTRACommand) message to the terminal, and correspondingly, the terminal receives mobilityFromEUTRACommand.

RRCmobilityFromEUTRACommand carries an NR target access technology capability container message NR targetRAT-MessageContainer, which carries at least one of the following: capability version information, a BC indication, an indication of a specific row of FSs corresponding to a BC, featureSetDownlinkPerCC corresponding to each CC, and featureSetUplinkPerCC corresponding to each uplink. In other words, the first indication information is carried in mobilityFromEUTRACommand.

The terminal sends an RRC reconfiguration complete message to a gNB, and correspondingly, the gNB receives the RRC reconfiguration complete message.

In addition, when the base station indicates, to the terminal, a band of an uplink transmit channel and at least one band pair for uplink transmit switching, but does not indicate, to the terminal, time for the uplink transmit switching in the band pair, the terminal may determine the switching time based on the following two implementations, and further determine the first capability.

Manner 1: When the terminal device supports a plurality of pieces of switching time in the band pair, the terminal device selects shortest switching time in the band pair, and further determines the first capability to complete subsequent communication.

The table in 410 is used as an example. The terminal supports the BC #1 and the BC #2, and the base station indicates, to the terminal, that the band pair for the uplink transmit switching is band A-band B, but does not indicate whether the base station determines the switching time in the band pair based on the BC #1 or the BC #2. In the BC #1, the switching time corresponding to band A-band B is 140 µs, and in the BC #2, switching time corresponding to band A-band B is 35 µs. The terminal selects the switching time of 35 µs, and further, the terminal determines that the first capability is the BC #2.

Manner 2: The terminal determines switching time based on a priority of the band pair, and further determines the first capability to complete subsequent communication.

For example, the base station indicates, to the terminal, that bands for the uplink transmit switching include the band A, the band B, and the band C, and the three bands are sent to the terminal device in a manner of configuring a band list for the uplink transmit switching. Bands in the band list are arranged in a descending order of priorities, to be specific, a band ranked first is of a highest priority, a band ranked second is of a second highest priority, the rest can be deduced by analogy, and a band ranked last is of a lowest priority. Priorities of different bands are different, and a priority of a band pair may be determined based on priorities of bands included in the band pair. For example, a priority of the band A is 1, a priority of the band B is 2, and a priority of the band C is 3. A smaller value indicates a higher priority. In this case, a priority of band A-band B is the highest, a priority of band A-band C is the second highest, and a priority of band B-band C is the lowest.

The table in 410 is used as an example, and the terminal device supports the BC #1 and the BC #2. Bands for the uplink transmit switching that are configured by the base station for the terminal are the band A, the band B, and the band C, which are arranged in a descending order of the priorities. In this case, the priority of the band A is the highest, the priority of the band B is the second highest, and the priority of the band C is the lowest. However, the base station does not indicate whether the configuration is based on the BC #1 or the BC #2. Based on the priorities of the bands, the terminal may determine that the priority of band A-band B is the highest, and the terminal selects, as the first capability, a BC that is with shorter switching time and that corresponds to band A-band B. In other words, in the BC #1, switching time corresponding to band A-band B is 140 µs, and in the BC #2, switching time corresponding to band A-band B is 35 µs. The terminal determines that switching time in band A-band B is 35 µ, and further, the terminal determines that the first capability is the BC #2. In this case, switching time in band A-band B, band A-band C, band B-band C may be determined based on the BC #2.

In the method, the terminal can obtain an accurate communication configuration in time, avoiding exceptions such as impaired uplink and downlink reception or bit errors that are caused because of inaccurate alignment between the base station and the terminal. In this way, communication quality can be improved.

It should be understood that the foregoing band pair, band, or priority corresponding to the band pair, a list form of bands for uplink transmit switching, and an arrangement sequence of the bands in the list are merely examples, and should not constitute a limitation on this application.

It may be understood that, to implement the functions in the foregoing embodiments, a network device and a terminal device include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

FIG. 8 and FIG. 9 are diagrams of structures of possible communication apparatuses according to an embodiment of this application. These communication apparatuses may be configured to implement the function of the terminal or the base station in the foregoing method embodiments. Therefore, beneficial effects of the method embodiments can also be achieved. In embodiments of this application, the communication apparatus may be one of the terminals 120a to 120j shown in FIG. 1, may be the base station 110a or 110b shown in FIG. 1, or may be a module (for example, a chip) used in the terminal or the base station.

As shown in FIG. 8, a communication apparatus 800 includes a processing unit 810 and a transceiver unit 820. The communication apparatus 800 is configured to implement a function of the base station or the terminal in the method embodiment shown in FIG. 2.

When the communication apparatus 800 is configured to implement the function of the base station in the method embodiment shown in FIG. 2,
the transceiver unit 820 may be configured to send first indication information;
the transceiver unit 820 may be further configured to send configuration information; and
the processing unit 810 is configured to determine the configuration information based on a first capability.

When the communication apparatus 800 is configured to implement the function of the terminal in the method embodiment shown in FIG. 2,
the transceiver unit 820 is configured to receive first indication information; and
the transceiver unit 820 is further configured to receive configuration information.

When the communication apparatus 800 is configured to implement the function of the base station in the method embodiment shown in FIG. 4,
the transceiver unit 820 may be configured to receive capability information;
the processing unit 810 is configured to determine configuration information based on the capability information; and
the transceiver unit 820 may be configured to send the configuration information.

When the communication apparatus 800 is configured to implement the function of the terminal in the method embodiment shown in FIG. 4,
the transceiver unit 820 may be configured to send capability information; and
the transceiver unit 820 may be configured to receive configuration information.

For more detailed descriptions of the processing unit 810 and the transceiver unit 820, directly refer to the related descriptions in the method embodiments shown in FIG. 3 and FIG. 4. Details are not described herein again.

As shown in FIG. 9, a communication apparatus 900 includes a processor 910 and an interface circuit 920. The processor 910 and the interface circuit 920 are coupled to each other. It may be understood that the interface circuit 920 may be a transceiver or an input/output interface. Optionally, the communication apparatus 900 may further include a memory 940, configured to store instructions executed by the processor 910, store input data needed by the processor 910 to run the instructions, or store data generated after the processor 910 runs the instructions.

When the communication apparatus 900 is configured to implement the methods shown in FIG. 2 to FIG. 7, the processor 910 is configured to implement a function of the processing unit 810, and the interface circuit 920 is configured to implement a function of the transceiver unit 820.

When the communication apparatus is a chip used in a terminal, the chip in the terminal implements a function of the terminal in the method embodiments. The chip in the terminal receives information from another module (for example, a radio frequency module or an antenna) in the terminal, where the information is sent by a base station to the terminal. Alternatively, the chip in the terminal sends information to another module (for example, a radio frequency module or an antenna) in the terminal, where the information is sent by the terminal to a base station.

When the communication apparatus is a module used in a base station, the module in the base station implements a function of the base station in the method embodiments. The module in the base station receives information from another module (for example, a radio frequency module or an antenna) in the base station, where the information is sent by a terminal to the base station. Alternatively, the module in the base station sends information to another module (for example, a radio frequency module or an antenna) in the base station, where the information is sent by the base station to a terminal. The module in the base station herein may be a baseband chip in the base station, or may be a DU or another module. The DU herein may be a DU in an open radio access network (open radio access network, O-RAN) architecture.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, any regular processor, or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be located in an ASIC. In addition, the ASIC may be located in a base station or a terminal. The processor and the storage medium may alternatively exist in the base station or the terminal as discrete components.

All or some of the foregoing embodiments may be implemented by using software, hardware, firmware, or any combination thereof. When the software is used for the implementation, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a base station, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions of different embodiments are consistent and may be mutually referenced, and technical features in different embodiments may be combined based on an internal logical relationship thereof, to form a new embodiment.

Depending on whether optional is used in this specification: In this application, "at least one" means one or more, and "a plurality of" means two or more. "And/or" describes an association relationship between associated objects and represents that three relationships may exist. For example, A and/or B may represent the following three cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:
receiving configuration information, wherein the configuration information is used to configure a terminal apparatus to perform communication in K cells, and K is a positive integer; and
receiving first indication information, wherein the first indication information indicates a first capability, the first capability is related to the configuration information, and the first capability is at least one of a first band combination, a first feature set, or a first carrier feature set.

2. The method according to claim 1, wherein before receiving the configuration information, the method further comprises:
sending capability information, wherein the capability information comprises at least one of the following:
at least one band combination supported by the terminal apparatus;
at least one feature set supported by the terminal apparatus, wherein the feature set comprises a downlink feature set and/or an uplink feature set, and each feature set in the feature set corresponds to one band entity in one band combination; and
at least one carrier feature set supported by the terminal apparatus, wherein the carrier feature set comprises a downlink carrier feature set and/or an uplink carrier feature set, and each carrier feature set in the carrier feature set corresponds to one carrier on one band in one band combination.

3. The method according to claim 2, wherein the first capability is the first band combination, the first indication information indicates an identifier of the first band combination, and the first band combination belongs to the at least one band combination supported by the terminal apparatus.

4. The method according to claim 2, wherein the first capability is the first feature set, the first indication information indicates an index of the first feature set, the index of the first feature set indicates a location of the first feature set in a first feature set combination, the first feature set combination is a feature set combination corresponding to the first band combination, and the first feature set is a subset of the at least one feature set supported by the terminal apparatus.

5. The method according to claim 2, wherein the first capability is the first carrier feature set, the first indication information indicates an identifier of the first carrier feature set, the first carrier feature set is a first downlink carrier feature set and/or a first uplink carrier feature set, and the first carrier feature set is a subset of the at least one carrier feature set supported by the terminal apparatus.

6. The method according to claim 5, wherein the first carrier feature set belongs to a first carrier feature set combination, the first carrier feature set combination comprises L carrier feature sets, L is a positive integer, the first carrier feature set combination corresponds to a first cell, and the first cell belongs to the K cells.

7. The method according to any one of claims 1 to 6, wherein the K cells are in one-to-one correspondence with K carrier feature set combinations, and each carrier feature set combination in the K carrier feature set combinations comprises one or more carrier feature sets.

8. The method according to claim 7, wherein the L carrier feature sets are in one-to-one correspondence with L carriers, the L carriers are candidate carriers used for communication in the first cell, the L carrier feature sets belong to the first carrier feature set combination, and the first carrier feature set combination corresponds to the first cell.

9. The method according to claim 8, wherein the L uplink carrier feature sets are arranged based on a first sequence, and the first sequence is an arrangement sequence of the L carriers in the first cell; and/or the L carrier feature sets are L downlink carrier feature sets, the L downlink carrier feature sets are arranged based on a second sequence, and the second sequence is an arrangement sequence of the L downlink carriers in the first cell.

10. The method according to any one of claims 5 to 9, wherein the first indication information further indicates a first carrier corresponding to the first carrier feature set.

11. The method according to any one of claims 2 to 10, wherein the method further comprises:
the capability information is first capability information, the capability information comprises a first identifier, and the first identifier indicates that the capability information is the first capability information.

12. A communication method, comprising:
determining configuration information based on a first capability, wherein the first capability is at least one of a first band combination, a first feature set, or a first carrier feature set, the configuration information is used to configure a terminal apparatus to perform communication in K cells, and K is a positive integer;
sending the configuration information; and
sending first indication information, wherein the first indication information indicates the first capability.

13. The method according to claim 12, wherein before sending the configuration information, the method further comprises:
receiving capability information, wherein the capability information comprises at least one of the following:
at least one band combination supported by the terminal apparatus;
at least one feature set supported by the terminal apparatus, wherein the feature set comprises a downlink feature set and/or an uplink feature set, and each feature set in the feature set corresponds to one band entity in one band combination; and
at least one carrier feature set supported by the terminal apparatus, wherein the carrier feature set comprises a downlink carrier feature set and/or an uplink carrier feature set, and each carrier feature set in the carrier feature set corresponds to one carrier on one band in one band combination.

14. The method according to claim 13, wherein
the first capability is the first band combination, the first indication information indicates an identifier of the first band combination, and the first band combination belongs to the at least one band combination supported by the terminal apparatus.

15. The method according to claim 13, wherein the first capability is the first feature set, the first indication information indicates an index of the first feature set, the index of the first feature set indicates a location of the first feature set in a first feature set combination, the first feature set combination is a feature set combination corresponding to the first band combination, and the first feature set is a subset of the at least one feature set supported by the terminal apparatus.

16. The method according to claim 13, wherein the first capability is the first carrier feature set, the first indication information indicates an identifier of the first carrier feature set, the first carrier feature set is a first downlink carrier feature set and/or a first uplink carrier feature set, and the first carrier feature set is a subset of the at least one carrier feature set supported by the terminal apparatus.

17. The method according to claim 16, wherein the first carrier feature set belongs to a first carrier feature set combination, the first carrier feature set combination comprises L carrier feature sets, L is a positive integer, the first carrier feature set combination corresponds to a first cell, and the first cell belongs to the K cells.

18. The method according to any one of claims 12 to 17, wherein the K cells are in one-to-one correspondence with K carrier feature set combinations, and each carrier feature set combination in the K carrier feature set combinations comprises one or more carrier feature sets.

19. The method according to claim 18, wherein the L carrier feature sets are in one-to-one correspondence with L carriers, the L carriers are candidate carriers used for communication in the first cell, the L carrier feature sets belong to the first carrier feature set combination, and the first carrier feature set combination corresponds to the first cell.

20. The method according to claim 19, wherein the L uplink carrier feature sets are arranged based on a first sequence, and the first sequence is an arrangement sequence of the L carriers in the first cell; and/or the L carrier feature sets are L downlink carrier feature sets, the L downlink carrier feature sets are arranged based on a second sequence, and the second sequence is an arrangement sequence of the L downlink carriers in the first cell.

21. The method according to any one of claims 16 to 20, wherein the first indication information further indicates a first carrier corresponding to the first carrier feature set.

22. The method according to any one of claims 17 to 21, wherein the method further comprises:
the capability information is first capability information, the capability information comprises a first identifier, and the first identifier indicates that the capability information is the first capability information.

23. A communication method, comprising:
receiving configuration information, wherein the configuration information is used to configure a terminal apparatus to perform uplink transmit channel switching or downlink receive channel switching between bands in a first band pair, the first band pair comprises at least two bands, and the configuration information comprises at least one of the following:
identifiers of the bands comprised in the first band pair;
a switching option for transmission channel switching between the bands in the first band pair;
switching time for the transmission channel switching between the bands in the first band pair; and
an identifier of a second band affected by the transmission channel switching between the bands in the first band pair.

24. The method according to claim 23, wherein
when the transmission channel switching is the uplink transmit channel switching, the second band is a band on which downlink receiving is affected by the uplink transmit channel switching between the bands in the first band pair.

25. The method according to claim 23 or 24, wherein
when the transmission channel switching is the uplink transmit channel switching, the switching option for the transmission channel switching between the bands in the first band pair is switched uplink transmission switchedUL or dual uplink transmission dualUL; or
when the transmission channel switching is the downlink receive channel switching, the switching option for the transmission channel switching between the bands in the first band pair is switched downlink transmission switchedDL or dual downlink transmission dualDL.

26. The method according to any one of claims 23 to 25, wherein before receiving the configuration information, the method further comprises:
sending capability information, wherein the capability information comprises a transmission channel switching capability supported by the terminal apparatus.

27. A communication method, comprising:
sending configuration information, wherein the configuration information is used to configure a terminal apparatus to perform uplink transmit channel switching or downlink receive channel switching between bands in a first band pair, the first band pair comprises at least two bands, and the configuration information comprises at least one of the following:
identifiers of the bands comprised in the first band pair;
a switching option for transmission channel switching between the bands in the first band pair;
switching time for the transmission channel switching between the bands in the first band pair; and
an identifier of a second band affected by the transmission channel switching between the bands in the first band pair.

28. The method according to claim 27, wherein
when the transmission channel switching is the uplink transmit channel switching, the second band is a band on which downlink receiving is affected by the uplink transmit channel switching between the bands in the first band pair.

29. The method according to claim 27 or 28, wherein
when the transmission channel switching is the uplink transmit channel switching, the switching option for the transmission channel switching between the bands in the first band pair is switched uplink transmission switchedUL or dual uplink transmission dualUL; or
when the transmission channel switching is the downlink receive channel switching, the switching option for the transmission channel switching between the bands in the first band pair is switched downlink transmission switchedDL or dual downlink transmission dualDL.

30. The method according to any one of claims 27 to 29, wherein before sending the configuration information, the method further comprises:
receiving capability information, wherein the capability information comprises a transmission channel switching capability supported by the terminal apparatus; and
determining the configuration information based on the capability information.

31. A communication apparatus, comprising a processing module and a transceiver module, wherein the communication apparatus is configured to perform the method according to any one of claims 1 to 11 or any one of claims 23 to 26.

32. A communication apparatus, comprising a processing module and a transceiver module, wherein the communication apparatus is configured to perform the method according to any one of claims 12 to 22 or any one of claims 27 to 30.

33. A communication apparatus, comprising a processor, wherein the processor is connected to a memory, the memory is configured to store a computer program, and the processor is configured to execute the computer program stored in the memory, to enable the apparatus to perform the method according to any one of claims 1 to 30.

34. A communication system, comprising the communication apparatuses according to claims 31 and 32.

35. A computer-readable storage medium, wherein the computer-readable storage medium is configured to store a computer program; and when the computer program is run on a computer, the computer is enabled to perform the method according to any one of claims 1 to 30.

36. A chip, comprising a processor and a communication interface, wherein the processor is configured to read instructions to perform the method according to any one of claims 1 to 30.

37. A computer program product, wherein the computer program product stores computer-readable instructions; and when the computer-readable instructions are run on a computer, the computer is enabled to perform the method according to any one of claims 1 to 30.
